# EUROPEAN PATENT APPLICATION

(11) **EP 1 835 702 A2**
(43) Date of publication of application: **19.09.2007**
(21) Application number: 07103926.7
(22) Date of filing: 12.03.2007
(51) Int. Cl.: H04L 29/12

(54) **Image processing device**

(30) Priority: 17.03.2006 KR 20060073632
(71) Applicant: Oki Data Corporation, Tokyo 108-8551 (JP)
(72) Inventor: Jingu, Hidehito c/o Oki Data Corporation, Tokyo 108-8551 (JP)
(74) Representative: Pisani, Diana Jean

(57) **Abstract**

An image processing device is connectable to a host device through a network. In the image processing device, a storage unit stores an identifier capable of distinguishing the image processing device, a communication unit receives data from the host device, a data control unit analyzes the received data, and if the received data include information equivalent to the identifier, a processor executes processing specified by the received data. The host device can learn the identifier by broadcasting a query on the network, then place the identifier in a setting request broadcast on the network, and thereby make or modify network address settings in the image processing device from a remote location.

## Description

### BACKGROUND OF THE INVENTION

### 1. Field of the Invention

The present invention relates to an image processing device that is connectable to a communication network such as a local area network.

### 2. Description of the Related Art

Local area networks interconnecting a plurality of devices such as personal computers, printers, and other computing and image processing devices now commonly operate under the well-known Transmission Control Protocol/Internet Protocol (TCP/IP). In a TCP/IP network each connected device is identified by an IP address, and the IP addresses are used as destination addresses of data transmissions. Consequently, before a device can receive unicast data addressed to it, it must be assigned an IP address.

If the device in question is a printer, setting the IP address involves operations performed directly on the control panel of the printer, switch settings on an interface card installed in the printer, or operations performed on a computer or other device connected to the printer on a one-to-one basis. Japanese Patent Application Publication No. 2001-339392 describes a scheme in which the IP address is set via a switch that is detachably connected to the interface card. All of these schemes are inconvenient, especially in a large network with many printers, some of which may be installed at locations distant from the network administrator. It would be more convenient if the IP address could be set remotely.

### SUMMARY OF THE INVENTION

An object of the present invention is to provide an image processing device in which settings such as IP address settings can be made and modified easily and reliably.

Another object of the invention is to provide an image processing device in which settings such as IP address settings can be made from a remote location.

The invented image processing device is connected to a host device through an interface. The image processing device includes an identifier storage unit storing an identifier capable of distinguishing the image processing device, a communication unit that receives data from the host device, a data control unit that analyzes the received data to determine at least whether the received data include information equivalent to the stored identifier, and a processor. If the received data include information equivalent to the identifier, the processor executes processing specified by the received data.

The identifying information may be generated from a serial number, asset number, manufacturer name and model number, or any other distinguishing information. The interface may connect the information processing device to a network on which the host device resides. The received data may be received from a broadcast on the network, and the processing specified by the received data may include setting or modifying address information that enables the image processing device to receive unicasts from the network. Before receiving the received data, the image processing device may receive a query broadcast on the network and reply by sending its identifying information to the host device.

With this arrangement, settings in the image processing device, such as its IP address setting, can be made and modified from a remote host device with which the image processing device communicates over the network.

### BRIEF DESCRIPTION OF THE DRAWINGS

In the attached drawings:
FIG. 1 is a block diagram of a printer according to a first embodiment of the invention, shown connected to a network;
FIG. 2 is a more detailed block diagram showing the internal structure of the network card in the printer in FIG. 1;
FIG. 3 illustrates the generation of the identifier in the first embodiment;
FIG. 4 is a block diagram showing the internal structure of the host device in FIG. 1;
FIG. 5 is a communication sequence diagram illustrating communication among the devices in FIG. 1;
FIG. 6 illustrates the request format used in FIG. 5;
FIG. 7 illustrates the response format used in FIG. 5;
FIG. 8 shows exemplary stored device information as displayed by the device information display unit of the host device in FIG. 4;
FIG. 9 illustrates modification of the information displayed in FIG. 8;
FIG. 10 is a flowchart illustrating the operation of the printer in the first embodiment;
FIG. 11 is a more detailed flowchart illustrating the request receiving process in FIG. 10;
FIG. 12 is a more detailed flowchart illustrating the response information preparation process in FIG. 11;
FIG. 13 is a more detailed flowchart illustrating the response data creation process in FIG. 11;
FIG. 14 is a flowchart illustrating the operation of the host device;
FIG. 15 is a more detailed flowchart illustrating the device information acquisition process in FIG. 14;
FIG. 16 is a more detailed flowchart illustrating the device information display process in FIG. 14;
FIGs. 17A, 17B, and 17C constitute a more detailed flowchart illustrating the device setting process in FIG. 14;
FIG. 18 is a block diagram of a printer according to a second embodiment of the invention, shown connected to a network;
FIG. 19 is a more detailed block diagram showing the internal structure of the network cards in the printer in FIG. 18;
FIG. 20 illustrates the generation of the identifiers in the second embodiment;
FIG. 21 is a flowchart illustrating the operation of the printer in the second embodiment; and
FIG. 22 is a more detailed flowchart illustrating the identifier generation process in FIG. 21.

### DETAILED DESCRIPTION OF THE INVENTION

Embodiments of the invention will now be described with reference to the attached drawings, in which like elements are indicated by like reference characters. 'ID' will be used as an abbreviation for 'identifier'.

### First Embodiment

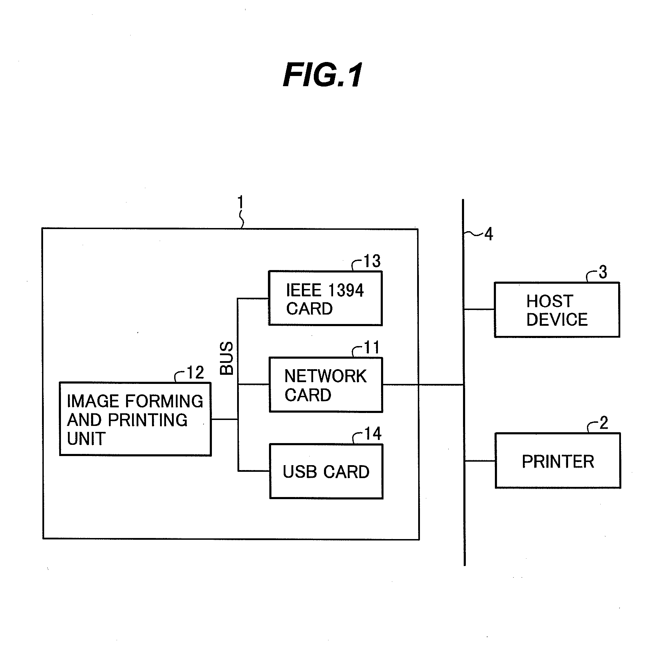

FIG. 1 shows an exemplary communication system including image processing devices, more specifically printers, according to the first embodiment of invention. The printers 1, 2 are connected to a host device 3 such as a personal computer by a network 4, typically a LAN, although the first embodiment is not limited to LAN environments.

In the system in FIG. 1, a system administrator or other user at the host device 3 can send broadcast messages on the network 4. A broadcast message is a message with a null destination address, which is received and analyzed by all other devices connected to the network 4. One type of broadcast that can be sent is a request for information about the connected devices.

In response to such a request, the connected devices send novel identifiers (IDs), as well as their unique media access control (MAC) addresses and other conventional information. On the basis of the received information, the user can send further commands to particular devices. For example, the user can select printer 1 and send it a command assigning it a new IP address. This type of command may need to be sent when printer 1 is first connected to the network, or at various other times.

The command is accompanied by the received ID of printer 1. Although the command is received by both printers 1 and 2, printer 2 ignores it, because the accompanying ID does not match the ID of printer 2. Printer 1 processes the command, because the accompanying ID matches the ID of printer 1, and thereby acquires a new IP address set remotely through the network 4.

The printer 1 includes a network card 11, which is a detachable interface card by which the image forming and printing unit 12 is connected to the network 4. Printer 1 also includes two other interface cards, an IEEE 1394 card 13 and a USB card 14, which can be used for other purposes if necessary. Incidentally, USB stands for Universal Serial Bus, IEEE stands for International Institute of Electrical and Electronics Engineers, and IEEE 1394 is a communication standard established by the IEEE.

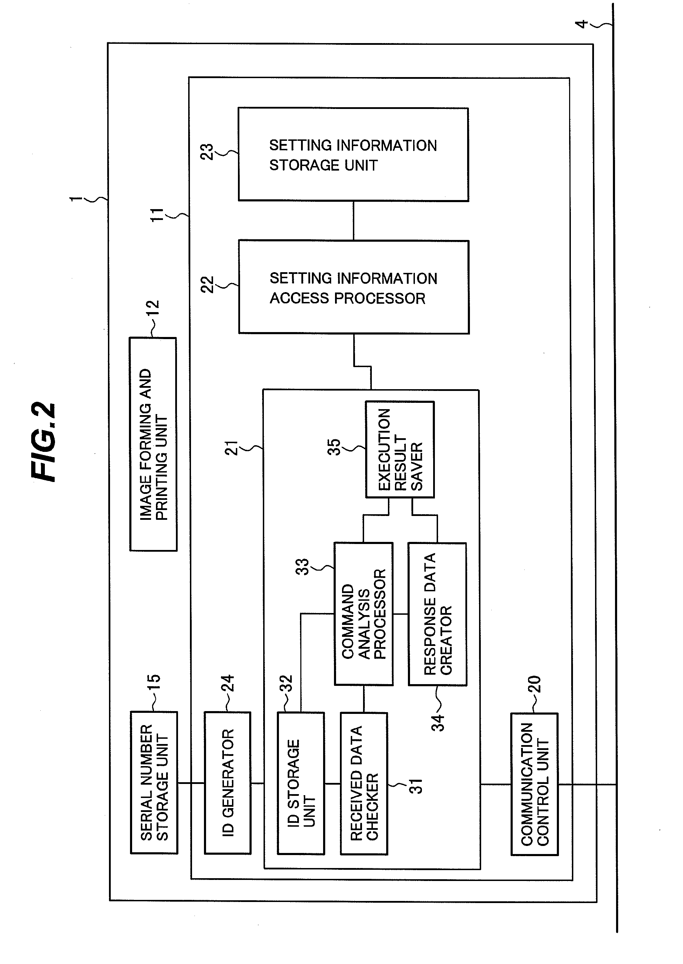

FIG. 2 shows the internal structure of printer 1 in more detail. The IEEE 1394 card 13 and USB card 14 shown in FIG. 1 are omitted in FIG. 2. Printer 2 has the same basic internal structure, so a separate description will be omitted.

Printer 1 includes, besides the network card 11 and image forming and printing unit 12, a serial number storage unit 15 that stores a serial number assigned to the printer 1 by the printer manufacturer. The serial number storage unit 15 is a nonvolatile memory area in which the serial number is written when the printer is manufactured. The nonvolatile semiconductor memory including this serial number area 15 is permanently mounted in the printer body and is not part of the network card 11.

The network card 11 comprises a communication control unit 20, a data control unit 21, a setting information access processor 22, and a setting information storage unit 23, and an ID generator 24. The communication control unit 20 controls communication with the host device 3 via the network 4. The ID generator 24 generates an ID from the information stored in the serial number storage unit 15. The data control unit 21 creates data to be sent by the communication control unit 20 onto the network 4 and analyzes data received by the communication control unit 20 from the network 4. When analysis of the received data shows that an instruction for modifying a setting has been received, the setting information access processor 22 performs the actual modification process. The setting information storage unit 23 stores the setting information.

The data control unit 21 includes a received data checker 31, an ID storage unit 32, a command analysis processor 33, a response data creator 34, and an execution result saver 35. The ID storage unit 32 stores the ID generated by the ID generator 24. The received data checker 31 checks whether the ID included in data received from the communication control unit 20 is a null ID (indicating data intended for all devices on the network 4) or the ID stored in the ID storage unit 32 (indicating data intended for printer 1), and discards the received data if neither condition is met. The command analysis processor 33 analyzes the received data and, when necessary, controls the setting information access processor 22 and reads the ID from the ID storage unit 32. When the command analysis processor 33 controls the setting information access processor 22 so as to execute a command in the received data, the execution result saver 35 stores the execution result. Following processing of the received data, the response data creator 34 creates response data and passes the response data to the communication control unit 20.

The network card 11 may be configured as an assemblage of specialized processors and storage or memory units as illustrated in the drawing, or it may be configured as a general-purpose processor with various types of data storage facilities, some of which store programs that are executed by the general-purpose processor to carry out the functions of the specialized processors in FIG. 2.

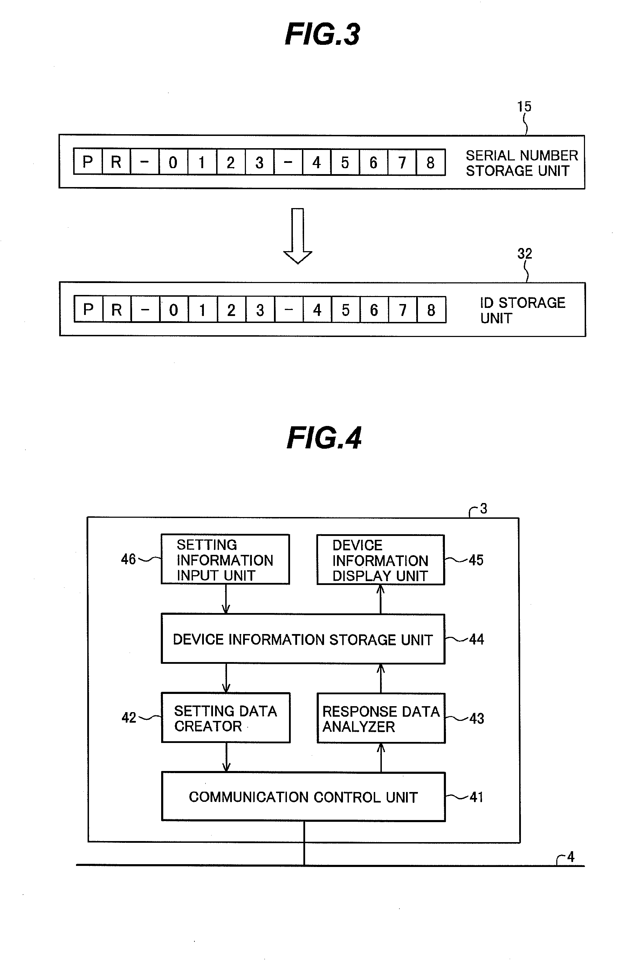

As part of the initialization process of the network card 11 upon startup of the printer 1, the ID generator 24 reads the serial number from the serial number storage unit 15, generates the ID, and stores the ID into the ID storage unit 32 as illustrated in FIG. 3. The entire serial number may be copied to generate the ID, as shown, or only part of the serial number, such as the last five digits, may be copied.

Turning now to the host device 3, as shown in FIG. 4, the host device 3 comprises a communication control unit 41 for controlling communication with the network 4 and the printers 1, 2 connected thereto, a setting data creator 42 for creating data to be transmitted from the communication control unit 41 to the printers 1, 2, a response data analyzer 43 for analyzing response data received at the communication control unit 41 from the printers 1, 2, a device information storage unit 44 for storing information concerning the printers 1, 2 which has been analyzed in the response data analyzer 43, a device information display unit 45 for displaying the data stored in the device information storage unit 44 to the user of the host device 3, and a setting information input unit 46 by which the user can enter information to select a device connected to the network 4 and make or modify settings in the selected device.

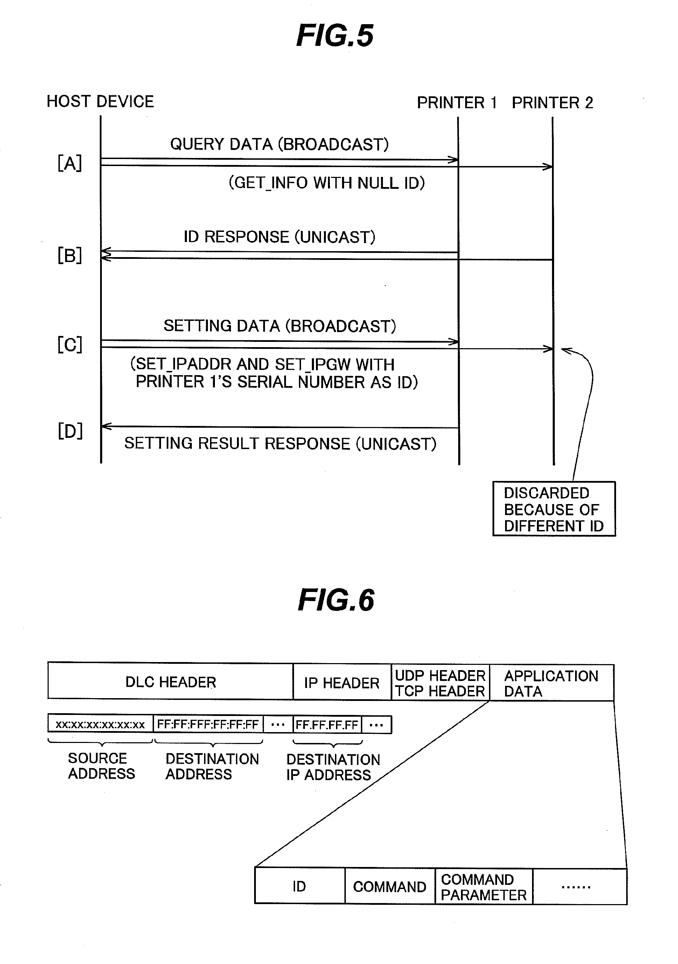

FIG. 5 illustrates a sequence of operations which a system administrator or other user at the host device 3 can use to identify the devices connected to the network and set a new IP address for printer 1.

First, this user launches a printer administration utility program in the host device 3, and this program invokes the setting data creator 42 in FIG. 4. To identify the devices connected to the network, the setting data creator 42 creates query data including a GET_INFO command (see Table 1 below) and a null ID and broadcasts the query data on the network 4 via the communication control unit 41 as shown at A in FIG. 5.

FIG. 6 is an explanatory diagram illustrating the general format of a packet sent on the network 4 from the host device 3. The packet includes a series of headers followed by application data. The headers include a data link control (DLC) header giving a source address, destination address, and other information, an IP header giving a destination address and other information, and a user datagram protocol (UDP) or transmission control protocol (TCP) header. The application data include the ID mentioned above, a command, its command parameters, and possibly further data.

Table 1 lists some of the commands that may be included in a packet sent from the host device 3, also giving their command parameters and brief descriptions of the commands.

**Table 1 Setting data commands and parameters**

| Command | Parameters | Description |
|---|---|---|
| GET_INFO | (none) | Request for ID and device name, MAC address, and IP address |
| SET_IPADDR | XXX.XXX.XXX.XXX | Change IP address to XXX.XXX.XXX.XXX |
| SET_IPMASK | YYY.YYY.YYY.YYY | Change IP subnet mask to YYY.YYY.YYY.YYY |
| SET_IPGW | ZZZ.ZZZ.ZZZ.ZZZ | Change IP default gateway to ZZZ.ZZZ.ZZZ.ZZZ |
| ..... | ..... | ..... |

In transmission A in FIG. 5, the source address is the IP address of the host device 3, the destination address is a sequence of hexadecimal F's designating a broadcast, the ID in the application data area is the null ID indicating data intended for all devices that receive the broadcast, the command is GET_INFO, and there are no command parameters.

When printers 1 and 2 receive transmission A, the received data checker 31 in each printer checks the ID in the application data area. Upon finding the null ID, the received data checker 31 invokes the command analysis processor 33. The command analysis processor 33 analyzes the rest of the application data area, finds the GET_INFO command, and reads the ID of the printer from the ID storage unit 32.

Next the setting information access processor 22 is invoked to read response information such as the printer's MAC address and IP address from the setting information storage unit 23, and the response data creator 34 is invoked, with this information and the printer's ID as arguments, to create response data. The communication control unit 20 then sends the response data as a unicast to the host device 3. This process is carried out at both printers 1 and 2 (transmission B in FIG. 5).

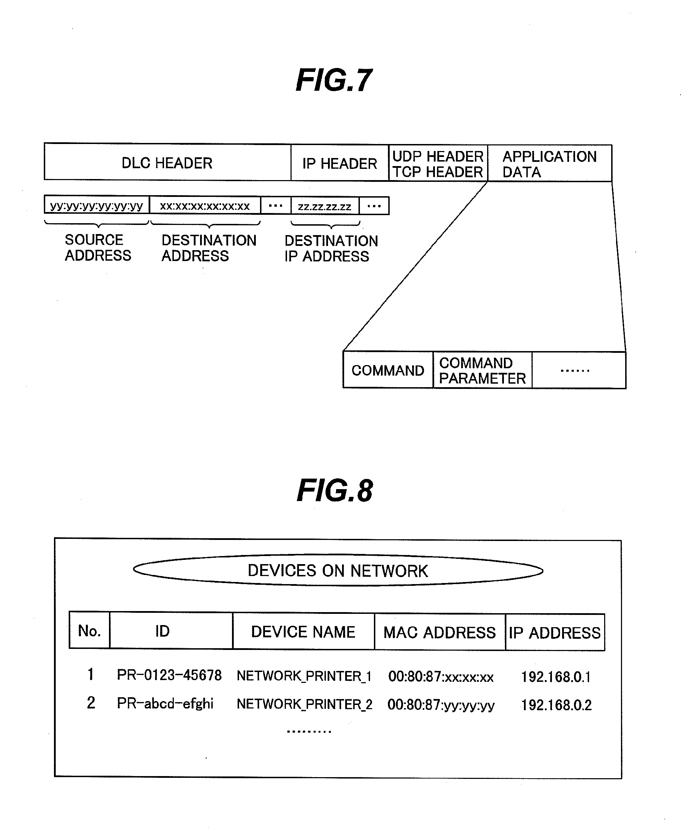

FIG. 7 illustrates the general format of a response from a printer to the host device 3. The DLC, IP, and UDP or TCP headers are followed by application data, again including a command and its command parameters. Table 2 lists some of the commands and parameters that may appear in the response data and gives brief descriptions.

**Table 2 Response data commands and parameters**

| Command | Parameters | Description |
|---|---|---|
| GETR_INFO | XXXXXXXXX | Reply giving ID information and device name, MAC address information, and IP address information |
| SETR_IPADDR | OK/NG | IP address change succeeded/failed |
| SETR_IPMASK | OK/NG | IP subnet mask change succeeded/failed |
| SETR_IPGW | OK/NG | IP default gateway change succeeded/failed |
| .... | .... | .... |

In the two transmissions at B in FIG. 5, the source address is the MAC address read from the printer's setting information storage unit 23, the destination address is the MAC address of the host device 3, the destination IP address is the IP address of the host device 3, the command is the GETR_INFO command, and the command parameters include the information indicated in the description in Table 2.

When these response data are received at the communication control unit 41 in the host device 3 shown in FIG. 4, the response data analyzer 43 is invoked. Finding the GETR_INFO command in the response data, the response data analyzer 43 extracts the ID, device name, MAC address, and IP address that follow the command as parameters in the response packet and stores the extracted information in the device information storage unit 44, possibly replacing an existing entry already present in the device information storage unit 44. As shown in Table 3, the device information storage unit 44 is a list of devices connected to the network 4 and their IDs, device names, and addresses.

**Table 3 Structure of device information storage unit**

| No. | ID | Device name | MAC address | IP address |
|---|---|---|---|---|
| 1 | PR-0123-45678 | NETWORK_PRINTER_1 | 00:80:87:xx:xx:xx | 192.168.0.1 |
| 2 | PR-abcd-efghi | NETWORK_PRINTER_2 | 00:88:87:yy:yy:yy | 192.168.0.2 |
| ... | ... | ... | ... | ... |

When the content of the device information storage unit 44 is updated, the device information display unit 45 is notified and the content of the device information storage unit 44 is displayed. FIG. 8 shows an exemplary display produced by the device information display unit 45.

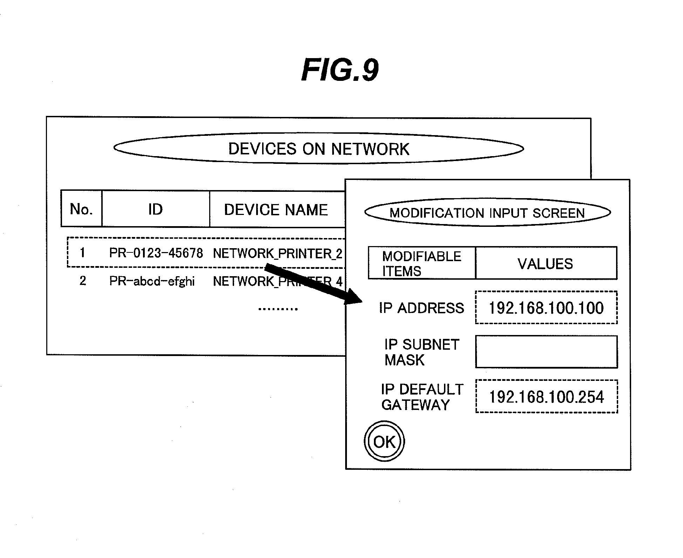

From the printers displayed on the device information display unit 45, the user of the host device 3 selects the printer in which the setting modification is to be made, printer 1 in the present example, by using a keyboard (not shown). The device information display unit 45 responds by displaying a modification input screen indicating the modifiable settings of printer 1 as shown in FIG. 9, for example. The user enters the desired modifications into the setting information input unit 46 while viewing the screen. An exemplary series of operations is described next.

In this example, when the display shown in FIG. 8 is displayed on the screen, the user selects item No. 1, corresponding to printer 1, with a left mouse click. This causes the device information display unit 45 to display a list (not shown) listing the modifiable items (including the IP address setting) of printer 1. The user selects 'IP address' from this list with a right mouse click, bringing up the modification input screen shown as an inset in FIG. 9. The user enters the desired new address information with the mouse and keyboard and clicks the OK button with the mouse to terminate the modification input operation.

In FIG. 9 the user enters new address information in the IP address box and the IP default gateway box. When the user clicks the OK button, the setting information input unit 46 determines which items have been modified and invokes the setting data creator 42 with the newly entered information as arguments. The setting data creator 42 creates setting data incorporating the arguments passed from the setting information input unit 46, in the present example including the ID (PR-0123-45678) of the selected printer 1, the SET_IPADDR and SET_IPGW commands, and their parameters (listed in Table 1). The communication control unit 41 sends the setting data as a broadcast on the network 4, as indicated at C in FIG. 5.

Both printers receive the broadcast. In each printer, when the communication control unit 20 receives the setting data it invokes the received data checker 31. The received data checker 31 checks the ID included in the setting data, discards the setting data if the ID does not match the printer's own ID, and invokes the command analysis processor 33 if the ID matches the printer's own ID. In the present example, the command analysis processor 33 is invoked in printer 1 and the data are discarded in printer 2. The command analysis processor 33 in printer 1 invokes the setting information access processor 22 according to the commands included in the setting data and the setting information access processor 22 updates the IP address and IP default gateway information stored in the setting information storage unit 23. After the update is completed, the response data creator 34 is invoked with the update results (OK or NG) as arguments. The response data creator 34 creates response data including appropriate commands and the received result information, and the communication control unit 20 sends the response data as a unicast to the host device 3 (D in FIG. 5). In the present example, the included commands are SETR_IPADDR and SETR_IPGW (refer to Table 2).

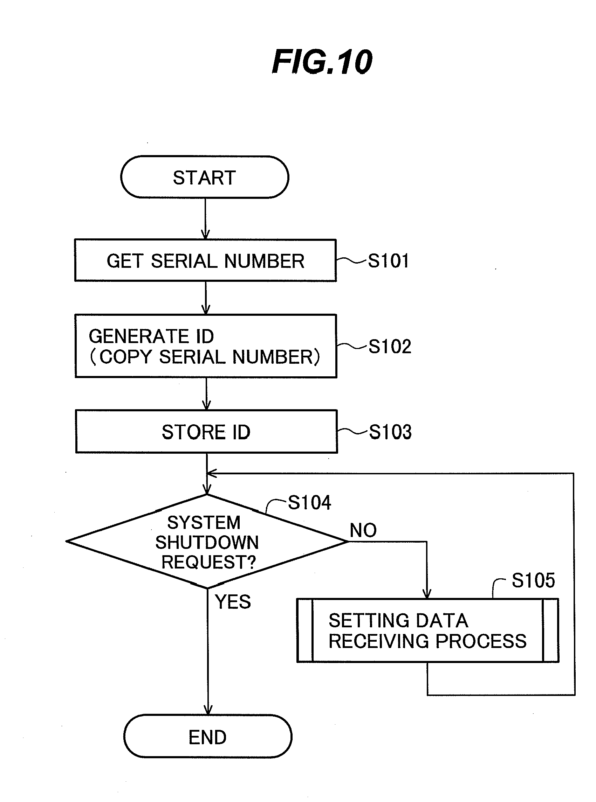

FIG. 10 summarizes the operations of printers 1 and 2 that relate to modifications of settings.

When printer 1 or printer 2 is powered up, the printer's serial number is read from the serial number storage unit 15 (step S101) and copied to generate the printer's ID (step S102), which is stored in the ID storage unit 32 (step S103). A setting data receiving process, described later, is then repeated until a system shutdown request is received (steps S104 and S105). The operations end when the system shutdown request is received.

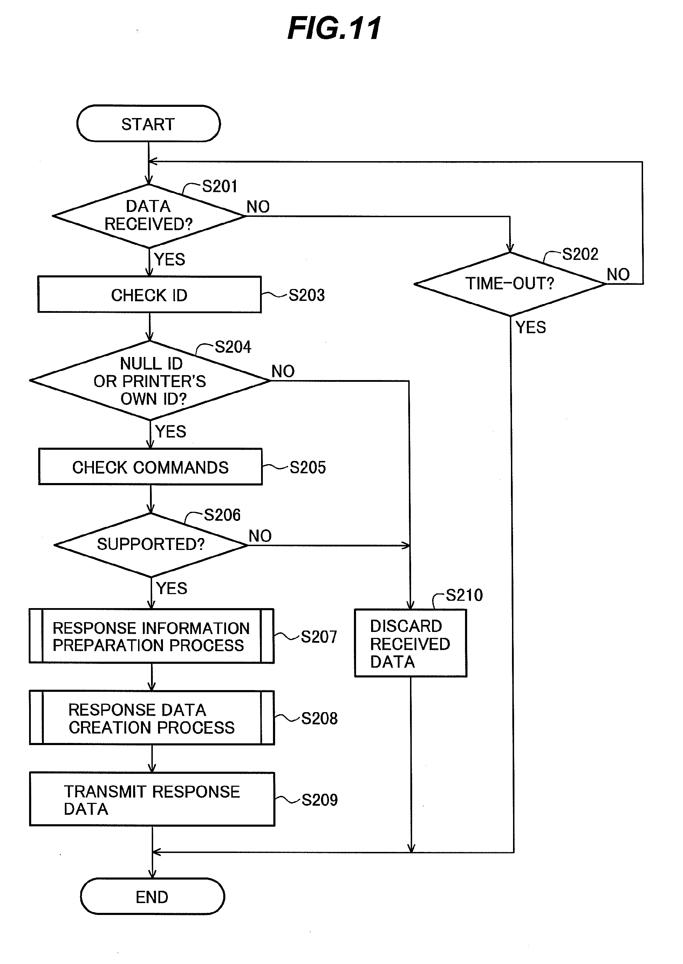

The setting data receiving process in step S105 is shown in more detail in the flowchart in FIG. 11.

When the setting data process starts, first whether data have been received or not is determined. If data are not received within a specified time, the setting data process times out and is terminated (steps S201 and S202). If data are received within the specified time, the ID in the received data is checked (step S203) to determine whether it is the null ID or matches the printer's ID (step S204). Matching the printer's ID may be required to mean that the received ID exactly matches the printer's ID, or may be allowed to mean that the received ID at least includes the printer's ID. If the ID in the received data is not the null ID and does not match the printer's ID (No in step S204), the received data are discarded (step S210) and the process ends.

If the ID in the received data is the null ID or the matches the printer's ID (Yes in step S204), the commands in the received data are checked (step S205) and whether the printer supports the commands, i.e., whether the commands are listed in Table 1, is determined (step S206). If a command is not supported (No in step S206), the received data are discarded (step S210) and the process ends. If the commands are supported (Yes in step S206), a response information preparation process (step S207, described later) and a response data creation process (step S208, described later) are executed, after which the created response data are transmitted (step S209) and the process ends.

The response information preparation process in step S207 is carried out for each command in the received data as illustrated in the flowchart in FIG. 11.

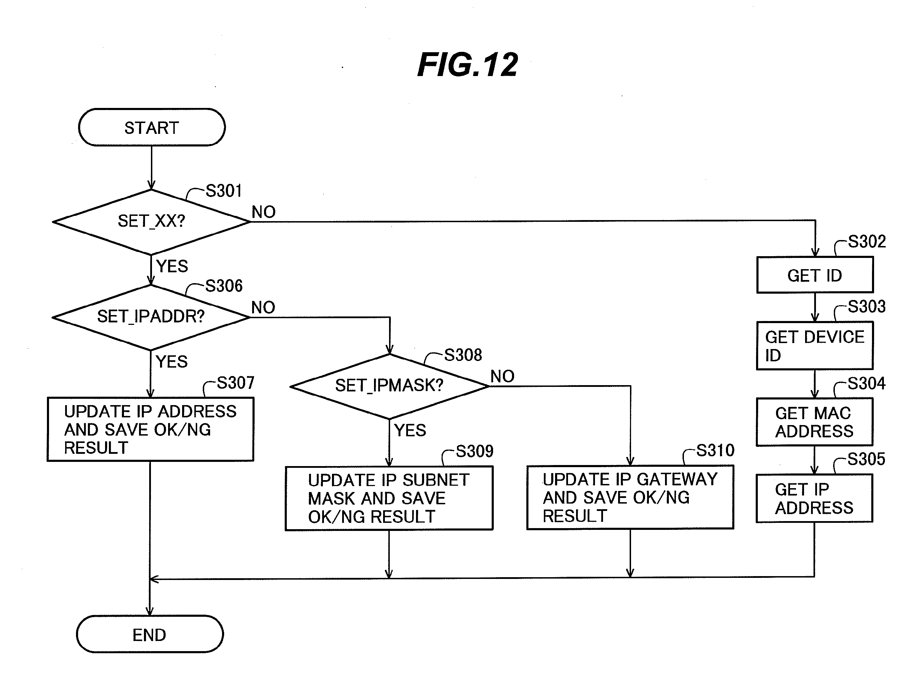

First, whether the command is a setting command (SET_XXX) or not is determined (step S301). If the command is not a setting command (No in step S301), then information is fetched from the setting information storage unit 23 as necessary and the process ends. In FIG. 12 it is assumed that there is only one command (GET_INFO) that is not a setting command, so the printer's ID (step S302), device name (step S303), MAC address (step S304), and IP address (step S305) are read from the setting information storage unit 23.

If the command is a setting command (Yes in step S301), whether the setting command is the IP address setting command (SET_IPADDR) or not is further determined (step S306). If the setting command is the SET_IPADDR command (Yes in step S306), the IP address held in the setting information storage unit 23 on the network card 11 is updated, an execution result (OK or NG) indicating whether the update was successful or not is stored in the execution result saver 35 (step S307), and the process ends.

If the setting command is not the SET_IPADDR command (No in step S306), then whether the setting command is the IP subnet mask setting command (SET_IPMASK) or not is determined (step S308). If the setting command is the SET_IPMASK command (Yes in step S308), the IP subnet mask stored in the setting information storage unit 23 is updated, an execution result (OK or NG) indicating whether the update was successful or not is stored in the execution result saver 35 (step S309), and the process ends.

Assuming that the only supported setting commands are the three shown in Table 1, if the setting command is neither the SET_IPADDR nor the SET_IPMASK command (No in step S308), then the setting command must be the IP default gateway setting command (SET_IPGW), so the IP default gateway stored in the setting information storage unit 23 is updated, an execution result (OK or NG) indicating whether the update was successful or not is stored in the execution result saver 35 (step S310), and the process ends.

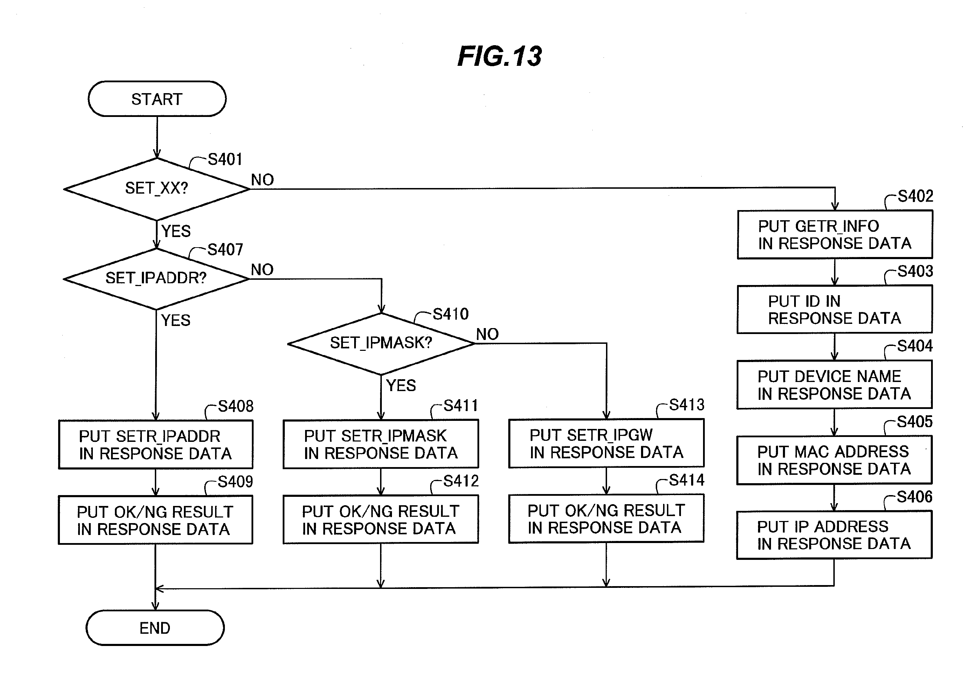

The response data creation process in step S208 is carried out for each command in the received data as illustrated in the flowchart in FIG. 13.

First, whether the command is a setting command (SET_XXX) or not is determined (step S401). If the command is not a setting command (No in step S401), then the information read from the setting information storage unit 23 in the preceding response information preparation process (step S207) is used to create response data. Assuming once more that the only non-setting command is GET_INFO, the GETR_INFO command (step S402) and the printer's ID (step S403), device name (step S404), MAC address (step S405), and IP address (step S406) are placed in the response data, and the process ends.

If the command is a setting command (Yes in step S401), whether the setting command is the IP address setting command (SET_IPADDR) or not is further determined (step S407). If the setting command is the SET_IPADDR command (Yes in step S407), then the SETR_IPADDR command is placed in the response data (step S408), the IP address update result (OK or NG) is read from the execution result saver 35 and placed in the response data as a command parameter (step S409), and the process ends.

If the setting command is not the SET_IPADDR command (No in step S407), then whether the setting command is the IP subnet mask setting command (SET_IPMASK) or not is determined (step S410). If the setting command is the SET_IPMASK command (Yes in step S410), the SETR_IPMASK command is placed in the response data (step S411), the IP subnet mask update result (OK or NG) is read from the execution result saver 35 and placed in the response data as a command parameter (step S412), and the process ends.

On the continuing assumption that the only supported setting commands are the three shown in Table 1, if the setting command is neither the SET_IPADDR nor the SET_IPMASK command (No in step S410), then since the setting command must be the IP default gateway setting command (SET_IPGW), the SETR_IPGW command is placed in the response data (step S413), the IP subnet mask update result (OK or NG) is read from the execution result saver 35 and placed in the response data as a command parameter (step S414), and the process ends.

The response data created by the process illustrated in FIG. 13 are passed to the communication control unit 41 to be sent to the host device 3 in step S209 in FIG. 11.

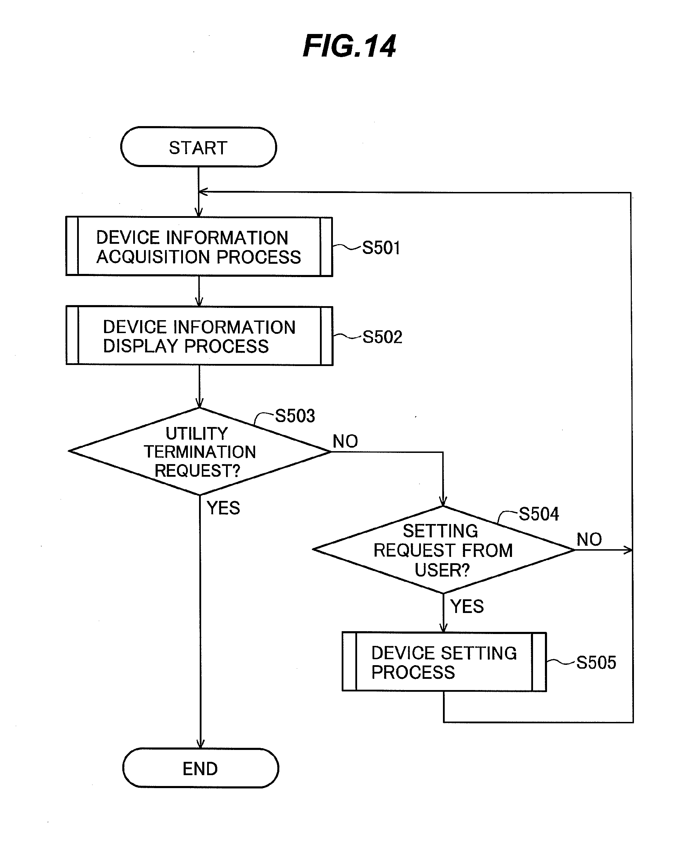

FIG. 14 summarizes the operations of the host device 3 that relate to modifications of settings. When the user of the host device 3 launches the printer administration utility, or gives an information acquisition command after launching the printer administration utility, a device information acquisition process is executed (step S501). Immediately thereafter, or later when the user gives an information display command, a device information display process is executed (step S502). If the user now requests termination of the utility (Yes in step S503), the operations end; otherwise (No in step S503), the presence or absence of a setting request from the user is determined (step S504). If a setting request is present (Yes in step S504), a device setting process is executed (step S505), followed by a return to the device information acquisition process at step S501. If no setting request is present, the device setting process is skipped and a return is made directly from step S504 to step S501. This cycle repeats itself until the printer administration utility is terminated in step S503.

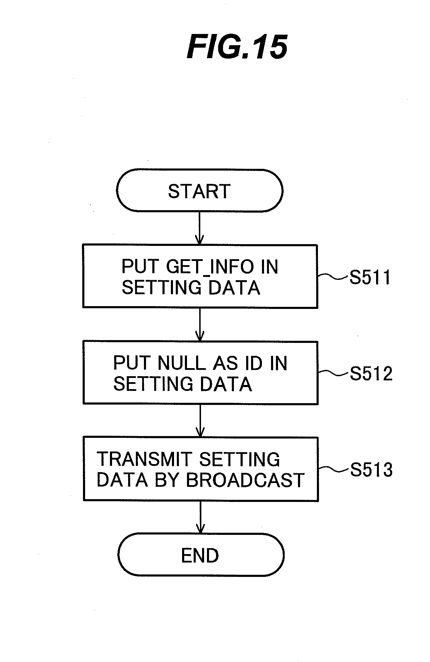

The device information acquisition process in step S501 is shown in more detail in the flowchart in FIG. 15. First, the GET_INFO command is placed in the setting data (step S511). Next, the null ID is placed as the ID in the setting data (step S512). Finally, the setting data are sent as a broadcast on the network 4 (step S513) and the process ends. This broadcast corresponds to transmission A in FIG. 5.

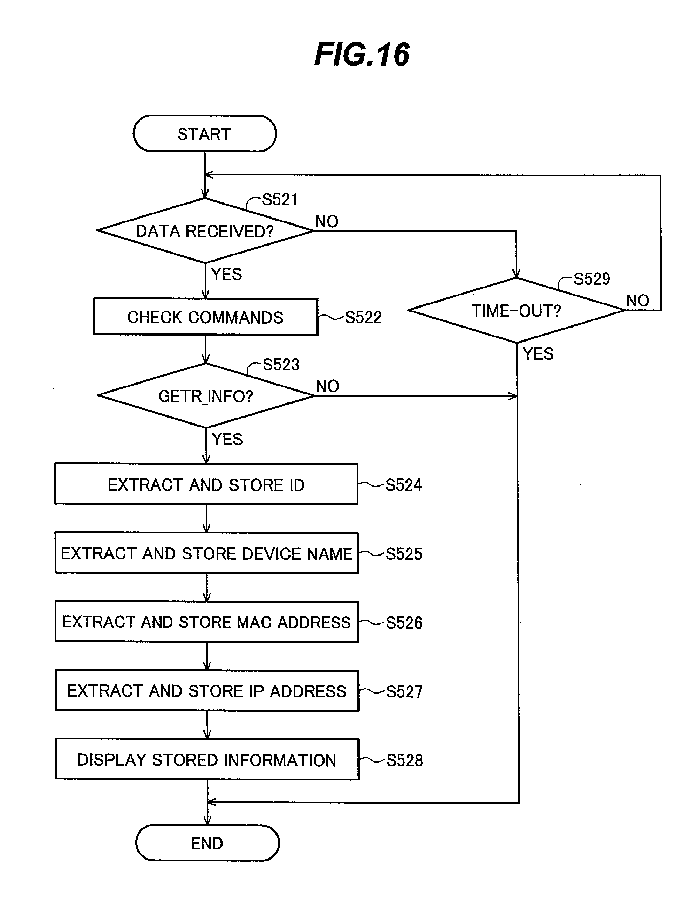

The device information display process in step S502 in FIG. 14 is shown in more detail in the flowchart in FIG. 16. When the device information display process starts, first whether response data have been received or not is determined, and if response data are not received within a designated time (for example, two or three minutes), the device information display process ends (steps S521 and S529). If response data are received within the designated time, the commands in the response data are checked (step S522) and whether the response data include a GETR_INFO command or not is determined (step S523). If there is no GETR_INFO command (No in step S523), the process ends.

If the response data include a GETR_INFO command (Yes in step S523), then the ID, device name, MAC address, and IP address are extracted from the response packet and stored in the device information storage unit 44 in FIG. 4 (steps S524 to S527). Finally, the stored information is displayed (step S528), and the process is terminated. An exemplary display was shown in FIG. 8.

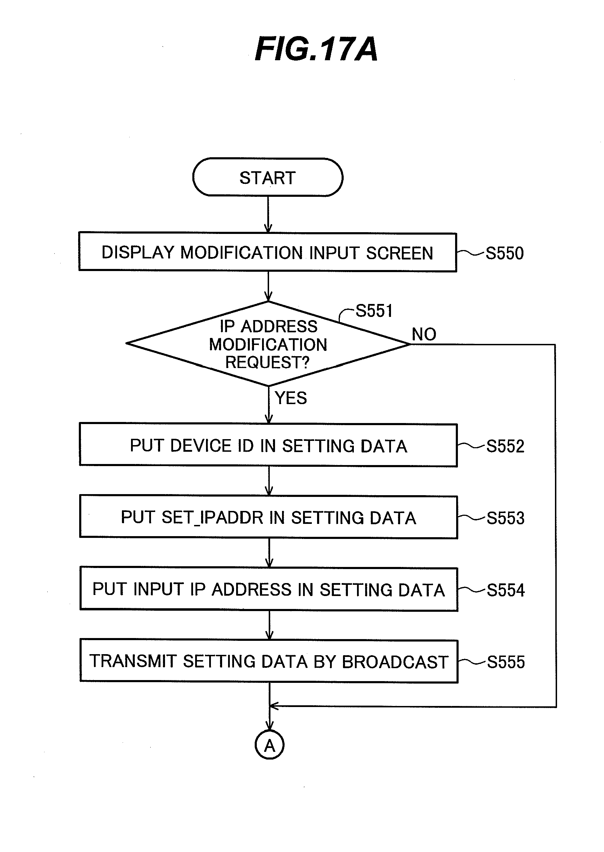

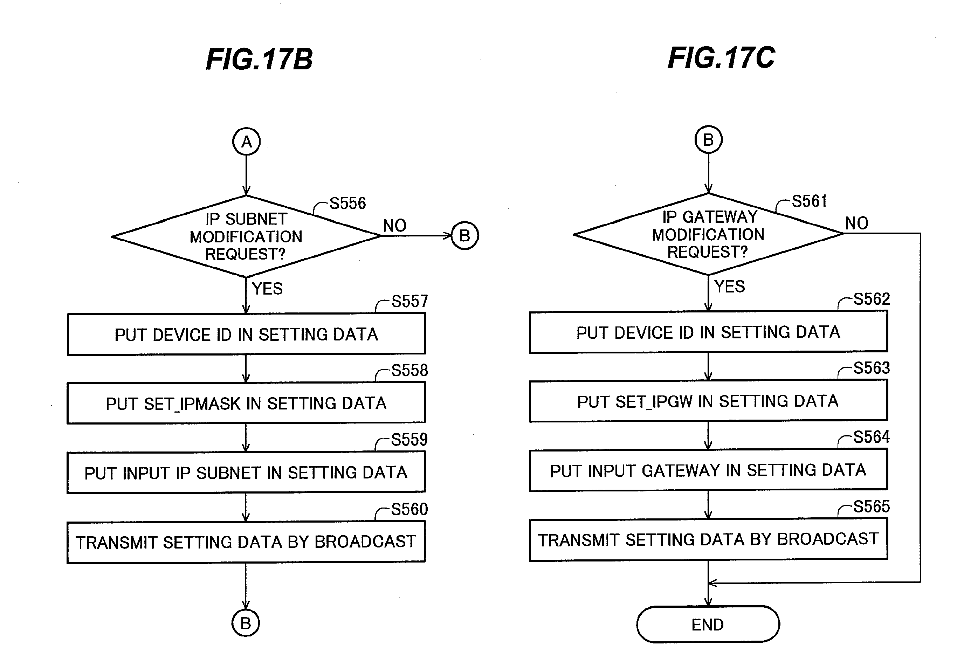

The device setting process in step S505 in FIG. 14 is depicted in more detail in the flowchart in FIGs. 17A to 17C. First the modification input screen shown in FIG. 9 is displayed (step S550 in FIG. 17A) and whether a modification of the IP address is requested or not is determined (step S551). If no such modification is requested (No in step S551), the process proceeds to step S556 in FIG. 17B. If a modification of the IP address is requested (Yes in step S551), the ID of the device in which the modification is to be made is placed in the setting data (step S552), the SET_IPADDR command is placed in the setting data (step S553), a new IP address entered by the user is placed in the setting data as a command parameter (step S554), and the setting data are sent as a broadcast on the network (step S555).

Next, whether a modification of the IP subnet mask is requested or not is determined (step S556 in FIG. 17B). If a modification is not requested (No in step S556), the process proceeds to step S561 in FIG. 17C. If a modification of the subnet mask is requested (Yes in step S556), the ID of the device to be modified is placed in the setting data (step S557), the SET_IPMASK command is placed in the setting data (step S558), a subnet mask input by the user is placed in the setting data as a command parameter (step S559), and the setting data are sent as a broadcast on the network (step S560).

Finally, whether a modification of the IP default gateway is requested or not is determined (step S561 in FIG. 17C). If a modification is not requested (No in step S561), the process ends. If a modification of the IP default gateway is requested (Yes in step S561), the ID of the device to be modified is placed in the setting data (step S562), the SET_IPGW command is placed in the setting data (step S563), a new IP default gateway entered by the user is placed in the setting data as a command parameter (step S564), the setting data are sent as a broadcast on the network (step S565), and then the process ends.

The broadcasts in steps S555, S560, and S565 collectively correspond to transmission C in FIG. 5.

As described above, according to the present embodiment, the IP address of a printer does not need to be set directly at the printer; it can be set from a remote location, such as the system administrator's desktop, which is considerably more convenient for the system administrator. Since the printer's ID is generated from information stored in the printer before it was connected to the network, the printer can be identified without needing to know how it is connected to the network; in particular, it is not necessary to note the address of the network card installed in the printer. This feature is convenient and reduces the risk of erroneous settings due to, for example, confusion between the MAC address of a printer and the MAC address of a network card.

### Second Embodiment

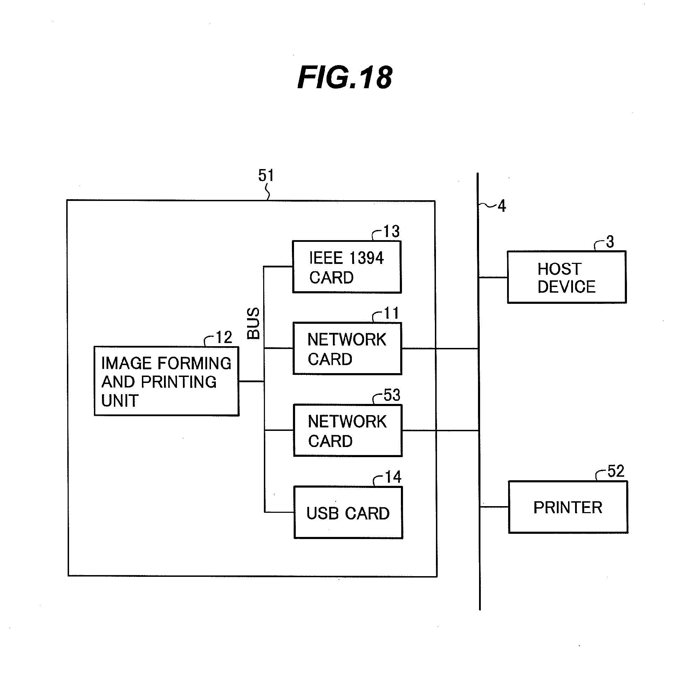

FIG. 18 shows an exemplary communication system including image processing devices, more specifically printers, according to the second embodiment of invention. The printers 51, 52 are connected to a host device 3 via a network 4 as in the first embodiment. The second embodiment differs from the first embodiment in that the printers have two network cards each, as indicated for printer 51. Both network cards 11, 53 are identical to the network card 11 in the first embodiment. In other respects as well, printer 15 is similar to printer 1 in the first embodiment, also including an image forming and printing unit 12, an IEEE 1394 card 13, and a USB card 14.

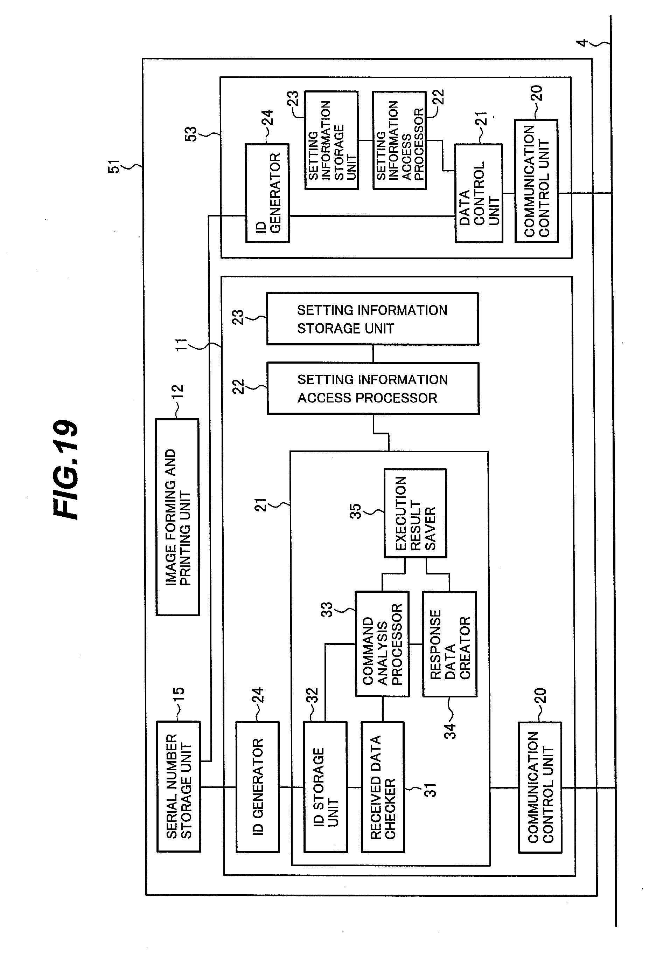

FIG. 19 is a block diagram illustrating key components of printer 51, including the two network cards 11, 53, the image forming and printing unit 12, and the serial number storage unit 15. Printer 52 has the same structure regarding these components. The IEEE 1394 card and USB card that were shown in FIG. 18 are omitted for simplicity.

Each network card 11, 53 comprises a communication control unit 20, a data control unit 21, a setting information access processor 22, and a setting information storage unit 23 which operate as described in the first embodiment, and an ID generator 24 which operates differently.

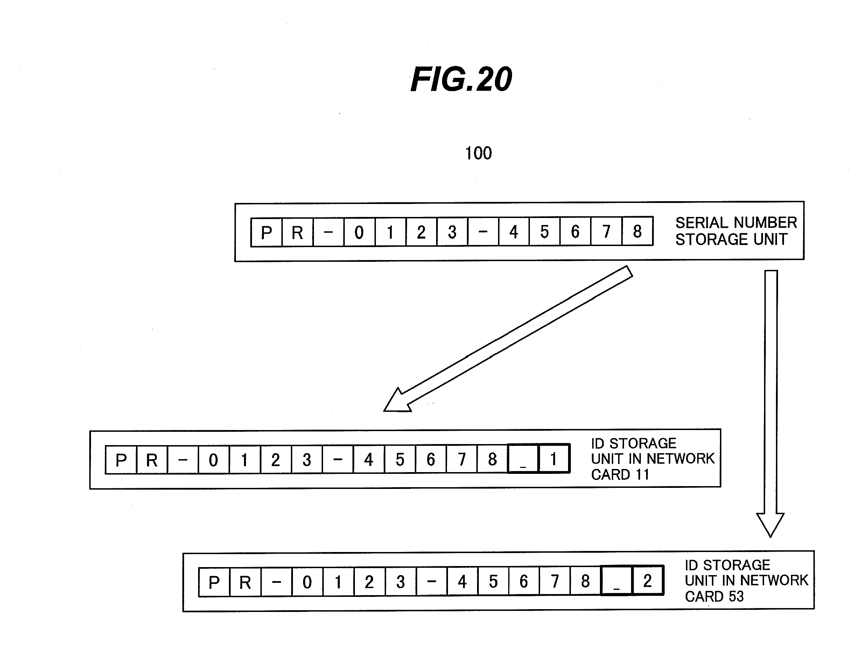

As in the first embodiment, the printer 51 is shipped from the factory with a serial number already stored in the serial number storage unit 15. When the printer 51 is powered up, as part of the initialization process of the interface cards 11, 53, the ID generator 24 in each network card reads the serial number from the serial number storage unit 15, generates an ID, and then stores it into the ID storage unit 32. Instead of simply copying the serial number as the ID, however, the ID generator 24 appends an under-bar character (_) and the slot number of a slot in which the interface card is installed to the serial number, as shown in FIG. 20, and stores the resulting ID in the ID storage unit 32 in the data control unit 21.

In the example shown in FIG. 20, network card 11 is installed in slot number one and network card 53 is installed in slot number two. The network cards 11, 53 learn the slot numbers in which they are installed by querying the printer 51 during the power-up process.

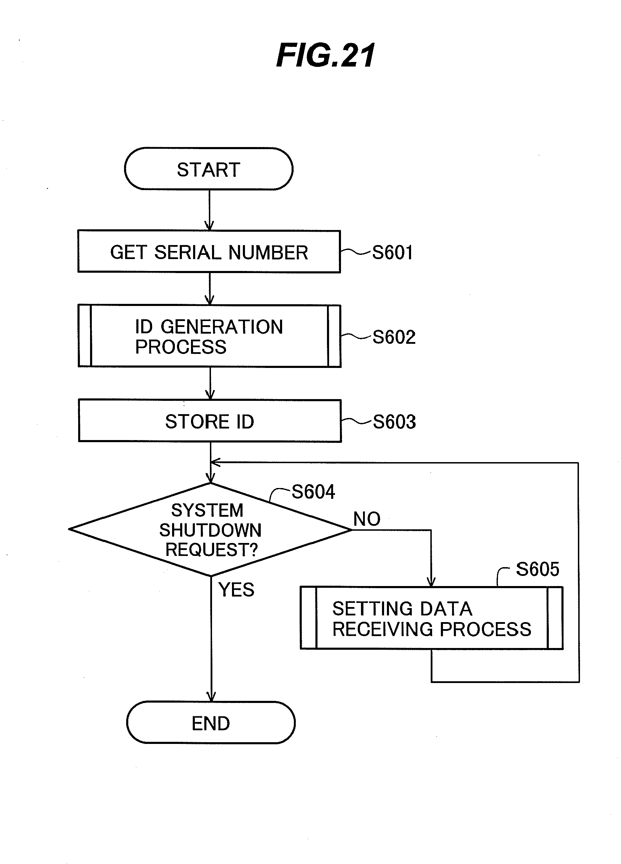

FIG. 21 illustrates the procedure followed by each printer 51, 52 to receive setting data in the second embodiment. When the printer is powered up, the ID generator 24 reads the printer's serial number from the serial number storage unit 15 (step S601), generates an ID (step S602), and stores the ID in the ID storage unit 32 (step S603). The setting data receiving process is then repeated until a system shutdown request is received, at which point the procedure ends (steps S604 and S605). Steps S601, S603, S604, and S605 are identical to the corresponding steps S101, S103, S104, and S105 in the first embodiment as illustrated in FIGs. 10 to 13.

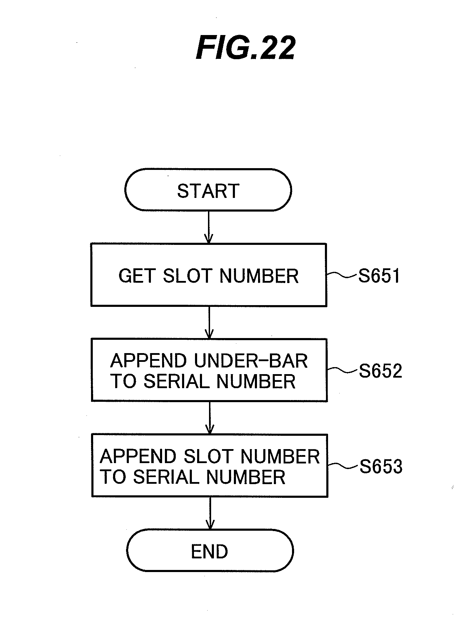

FIG. 22 illustrates the ID generation process in step S602 in more detail. This process is carried out separately by each network card 11, 53. When the process starts, first the number of the slot in which the network card is installed is acquired (step S651). Then an under-bar (_) is appended to the serial number (step S652), the slot number is appended after the under-bar (step S653), and the process ends.

In the setting data receiving process in step S605 in FIG. 21, if printer 51 receives a GET_INFO command, it returns the ID generated in step S602 by the network card 11 through which printer 51 is connected to the network 4. Setting commands received subsequently will include this ID, so the commanded settings will be made in network card 11, and not in network card 53.

Other operations are carried out in the same way in the second embodiment as in the first embodiment, so descriptions will be omitted.

The second embodiment provides the same effects as the first embodiment, with the additional effect that if the printer is connected to two networks by two interface cards, separate settings can be made in each network card from a remote location in the corresponding network.

The invention is not limited to any particular type of network or network card. For example, the invention can also be practiced by use of the IEEE 1394 card 13 or USB card 14 shown in FIGS. 1 and 18.

Nor is the invention limited to printers. The invention can be usefully practiced in any image processing device that is connected to a network and has settings, such as IP address settings, that are necessary for unicast access from the network, but could most conveniently be made and modified through the network. Examples of such devices include personal computers, copiers, multi-function printers (MFPs), facsimile machines, and so on.

The ID need not be generated from a serial number; an asset number may be used instead. An asset number is a value assigned and set in a predetermined nonvolatile memory area in the body of the image processing device, typically when it is delivered or installed, by the purchaser of the image forming apparatus, or an administrator or serviceman. When an organization purchases ten printers, for example, an administrator in the organization may assign them asset numbers PR-1, PR-2,..., PR-10. Many image processing devices have built-in nonvolatile memories for storing asset numbers and provide facilities for setting the asset number directly from a control panel of the image processing device, or a computing device to which the image processing device is connected by a cable or communication link.

Alternatively, the ID may be generated from a name assigned to the image processing device, or from the manufacturer's name and model number of the image processing device, if there is only one device of that model connected to the network. In short, the ID may be generated from any information that is available in the image processing device and is unique within the network or sub-network to which the image processing device is connected. More precisely, any information may be used that is capable of generating an ID that is unique within the range of a broadcast received by the image processing device.

Those skilled in the art will recognize that further variations are possible within the scope of the invention, which is defined in the appended claims.

## Claims

1. An image processing device (1) that communicates with a host device (3) through an interface (11), the image processing device comprising:
an identifier storage unit (32) for storing an identifier capable of distinguishing the image processing device;
a communication unit (20) for receiving data from the host device (3);
a data control unit (21) for analyzing the received data to determine at least whether information equivalent to the identifier is included in the received data; and
a processor (22) for performing processing specified by the received data if the received data include information equivalent to the identifier.

2. The image processing device (1) of claim 1, wherein the image processing device is connected to a network (4) on which that host device (3) sends broadcasts that are received within a broadcast range, and the identifier is unique within the broadcast range.

3. The image processing device (1) of claim 1, further comprising a nonvolatile memory (15) storing identifying data from which the identifier is generated.

4. The image processing device (1) of claim 3, wherein the image processing device has a serial number and the serial number is used as said identifying data.

5. The image processing device (51) of claim 3, wherein the image processing device has a serial number, the interface (11) has interface identifying information, and said identifying data include both the serial number and the interface identifying information.

6. The image processing device (51) of claim 5, wherein the interface (11) is installed in a slot in the image processing device and the interface identifying information is a slot number of the slot.

7. The image processing device (1) of claim 1, wherein the data control unit (21) has a response data creator (34) that, in response to a query received from the host device (3), creates response data including the identifier and sends the response data to the host device.

8. The image processing device (1) of claim 1, wherein the image processing device has an Internet Protocol (IP) address and the processor (22) alters the IP address according to the received data.

9. The image processing device (1) of claim 1, wherein the identifier includes a device name.

10. The image processing device (1) of claim 1, wherein the identifier includes an asset number.

11. The image processing device (1) of claim 1, wherein the image processing device and host device (3) are connected to a communication network (4), the interface (11) being an interface between the image processing device and the communication network.

12. The image processing device (1) of claim 11, wherein the data control unit (21) has a response data creator (34) that, in response to a query broadcast from the host device (3) on the network (4), creates response data including the identifier and sends the response data to the host device.

13. The image processing device (1) of claim 12, wherein said received data are received in a request broadcast from the host device (3) on the network (4) and the processing specified by said received data includes setting address information enabling the image processing device to receive unicasts from the network.

14. The image processing device (1) of claim 13, wherein the address information includes an IP address.

15. The image processing device (1) of claim 12, wherein said received data are received in a request broadcast from the host device (3) on the network (4) and the processing specified by the received data includes modifying address information enabling the image processing device to receive unicasts from the network.

16. The image processing device (1) of claim 15, wherein the address information includes an IP address.

17. The image processing device (1) of claim 1, wherein said received data include header data and application data, the information equivalent to the identifier being placed in the application data.

18. An image processing device (1) that communicates with a host device (3) through an interface (11), the image processing device comprising:
a number generator (15) for generating a number according to a predetermined rule;
an identifying information generator (24) for generating identifying information for identifying the image processing device (1) from the number generated by the number generator (15);
a communication control unit (20) for sending the identifying information generated by the identifying information generator (24) to the host device (3) through the interface (11), and receiving address information corresponding to the identifying information from the host device through the interface; and
a setting processor (22) for setting the address information received by the communication control unit (20) as an address of the image processing device (1) for use in communication with the host device (3).
